# FASCICULE DE BREVET EUROPEEN

(11) **EP 0 854 117 B1**
(45) Date de publication et mention de la délivrance du brevet: **24.08.2011**
(21) Numéro de dépôt: 98400053.9
(22) Date de dépôt: 13.01.1998
(51) Int. Cl.: C03C 3/078, H01J 17/16, H01J 61/02

(54) **Compositions de verre silico-sodo-calcique et leurs applications**
Kalknatron-Silikatglaszusammensetzungen und deren Anwendungen
Soda-lime-silica glass compositions and uses thereof

(30) Priorité: 17.01.1997 FR 9700498
(43) Date de publication de la demande: 22.07.1998
(73) Titulaire: SAINT-GOBAIN GLASS FRANCE, 92400 Courbevoie (FR)
(72) Inventeur: El Khiati, Nathalie, 95170 Deuil La Barre (FR); Dideron, Nathalie, 75019 Paris (FR); Ricoult, Daniel, 91120 Palaiseau (FR); Laborde, Pascale, 77130 La Grande Paroisse (FR)
(74) Mandataire: Renous Chan, Véronique

(56) Documents cités:
- EP-A- 0 525 555
- EP-A- 0 592 237
- EP-A- 0 769 481
- EP-A- 0 795 522
- WO-A-96/11887
- DE-A- 19 615 688
- US-A- 4 665 039
- US-A- 5 631 195
- DATABASE WPI Section Ch, Week 9114 Derwent Publications Ltd., London, GB; Class L01, AN 91-097670 XP002041709 & JP 03 040 933 A (ASAHI GLASS CO LTD) , 21 février 1991

## Description

La présente invention a pour objet des compositions de verre aptes à être transformées en ruban de verre dans lequel peuvent être découpées des plaques, et qui résistent bien à la chaleur. Ces plaques peuvent être utilisées pour réaliser des vitrages anti-feu ou servir de substrats pour la fabrication d'écrans plasma, d'écrans électroluminescents et d'écrans à cathode froide (Field-Emission-Displays).

Le verre utilisé au départ pour réaliser de tels substrats est un verre appartenant à la famille des verres silico-sodo-calciques, couramment utilisés pour fabriquer des vitrages destinés aux bâtiments ou aux véhicules automobiles. Si ce type de verre donne globalement satisfaction quant à sa résistance chimique, à la planéité et aux défauts qu'il présente, sa tenue en température laisse parfois à désirer.

Lors de la fabrication des écrans émissifs du type écrans plasma, le substrat est soumis à plusieurs traitements thermiques qui ont pour but de stabiliser les dimensions dudit substrat et de fixer une série de couches de différents composés, tels que des émaux, déposées sur sa surface. La fixation de ces couches d'épaisseurs plus ou moins importantes nécessite que le substrat soit porté à des températures supérieures à 550°C. Si le coefficient de dilatation du verre silico-sodo-calcique utilisé est du même ordre de grandeur que celui des composés déposés sur sa surface, sa tenue en température est insuffisante et il est nécessaire de la poser sur une dalle rectifiée lors des traitements thermiques pour éviter toute déformation.

Les verres utilisés pour la fabrication de vitrages anti-feu appartiennent généralement à la famille des verres borosilicates. Ces verres, qui présentent une très bonne résistance à la chaleur et au choc thermique, se caractérisent généralement par un faible coefficient de dilatation. Cette dernière caractéristique ne permet pas de développer dans ces verres de fortes contraintes par trempe thermique, et l'augmentation de leur résistance mécanique par ce moyen s'en trouve limitée.

De nouvelles familles de compositions de verre ont alors été mises au point et décrites dans le brevet WO-96/11887, afin de pallier à ces inconvénients, notamment afin de pouvoir fabriquer des plaques ou substrats à déformation quasiment nulle lors de traitements thermiques de l'ordre de 550 à 600°C et aptes à présenter, par trempe thermique, des niveaux de contraintes comparables à ceux obtenus avec du verre silico-sodo-calcique standard.

Une famille particulièrement intéressante pour une application d'écran plasma décrite dans le brevet précité est celle utilisant peu ou pas d'alumine Al₂O₃, un taux élevé de zircone ZrO₂ et des teneurs en oxydes alcalino-terreux, dont l'oxyde de baryum BaO, bien spécifiques.

Cependant, de manière jusque-là encore inexpliquée, il s'est avéré que, dans certains cas, le substrat ou la plaque soumis à des cycles de traitement usuels, au-delà de 500°C, pouvaient développer des défauts optiques se traduisant, notamment, par des colorations locales, défauts persistant après lavage. Cette dégradation optique affecte le rendement de production.

Le but fixé par la présente invention a alors été de trouver les raisons de l'apparition de ces défauts optiques, et de proposer des compositions de verre améliorées pouvant y remédier, tout en conservant les propriétés précédemment évoquées.

L'invention a pour objet une composition de verre destinée à la fabrication de substrats ou plaques thermiquement stables qui comprend les constituants ci-après dans les proportions pondérales suivantes, selon une première variante:

| | |
|---|---|
| SiO₂ | 55-60% |
| Al₂O₃ | 0 - 5 %, de préférence 1 - 4 % |
| ZrO₂ | 5 - 10 %, de préférence 6 - 9 % |
| B₂O₉ | 0 - 3 %, de préférence 0 - 1 % |
| Na₂O | 2 - 6 %, de préférence 3 - 5 % |
| K₂O | 5-9% |
| MgO | 9 - 6 % |
| CaO | 7 à 11 % |
| SrO | 4 -12 %, de préférence 6 -10 % |
| BaO | 0 - 2 %, de préférence 0 - 1 ou 1 - 2 % |
| SO₃ | supérieur à 0 et d'au plus 0,5 %, de préférence entre 0,005 et 0,15 % |

Les relations suivantes, toujours en proportions pondérales, sont également respectées dans la composition :
Na₂O + K₂O≥ 8%,

   notamment entre 10 et 15 %
MgO + CaO + SrO + BaO > 15 %,
ladite composition présentant une température inférieure de recuisson (désignée également sous le terme de « strain point »), qui est supérieure à 600°C.

Selon une seconde variante, les constituants de la composition précédente sont maintenus inchangés, en des teneurs identiques, mis à part deux oxydes : la zircone et l'alumine.

Dans cette variante, les teneurs en pourcentages de ces deux composants sont :

| | |
|---|---|
| Al₂O₃ | 5-10% |
| ZrO₂ | 0-5 %, |

les compositions selon la seconde variante présentant une température inférieure de recuisson (désignée également sous le terme de strain point) supérieure à 570°C, de préférence supérieure à 580°C ou 600°C.

Avec ces types de composition, les substrats ou plaques sont aptes à subir les traitements thermiques nécessaires à leur application, par exemple en tant qu'écrans plasma, sans dégradation optique. En fait, les inventeurs sont tout d'abord parvenus à identifier ce qui générait des défauts : lors des traitements thermiques, les substrats reposent sur des supports, notamment sur des rouleaux, plots ou surfaces continues. Ils ont observé qu'il y avait en fait, sous l'effet de la chaleur, une possibilité de développement de cristaux, plus particulièrement à partir des zones de point de contact entre plaques/substrats et leurs supports, cristaux leur conférant, localement, une teinte tirant vers le jaune et constitués principalement de sulfate de baryum BaSO₄ ; le baryum provenant du BaO et le sulfate migrant à la surface du verre cristallisant en BaSO₄ sous certaines conditions.

Une première approche pour résoudre ce problème aurait pu être de supprimer le soufre dans le verre. Cependant, il est quasiment toujours présent, en tant qu'impureté amenée par les matières premières des autres constituants du verre, dans des teneurs de l'ordre généralement de quelques centaines à quelques milliers de ppm et/ou en tant qu'agent affinant et/ou par incorporation dans le verre du soufre contenu dans l'atmosphère, notamment à la sortie de l'outil de formage. Utiliser des matières premières suffisamment pures pour débarrasser le verre du soufre entraînerait des surcoûts prohibitifs. En outre, la présence de soufre dans le verre peut faciliter son affinage lors du formage.

L'approche adoptée dans le cadre de l'invention a été de contrôler le taux de BaO dans le verre, notamment à le maintenir à un taux très bas voire nul. Si l'on n'utilise pas du tout de BaO dans le verre, le problème est réglé radicalement. Cependant, comme explicité ultérieurement, l'oxyde de baryum est un oxyde alcalino-terreux qui peut être intéressant pour obtenir certaines propriétés du verre. Il peut donc être judicieux de garder jusqu'à 1 ou 2% de BaO dans le verre, quitte, éventuellement, à adapter légèrement les conditions des traitements thermiques pour les rendre défavorables à la formation de cristaux de BaSO₄ qui, même en traces, s'avèrent très pénalisants sur le plan de la qualité optique. Il peut notamment s'agir d'ajouter une étape de lavage adapté après l'un au moins des traitements thermiques.

Il est à souligner que cette suppression de défauts optiques dus à la formation de cristaux de BaSO₄ n'est pas obtenue au détriment des autres propriétés recherchées pour le verre.

Ainsi, il est communément admis que le verre n'a plus aucun comportement visqueux au-dessous d'une température caractéristique appelée température inférieure de recuisson (strain point), qui correspond à une viscosité de l'ordre de 10^{14,5} poises. De ce fait, cette température est un point de repère intéressant pour évaluer la tenue en température d'un verre. Grâce à la combinaison des constituants telle qu'elle résulte de la définition de l'invention, les verres répondant à cette définition possèdent une température inférieure de recuisson supérieure à 600°C, température supérieure d'au moins 90°C environ à celle d'un verre silico-sodo-calcique classique. Les compositions selon l'invention atteignent des valeurs de strain point tout-à-fait comparables à celles obtenues avec d'autres compositions adaptées à la fabrication d'écrans plasma et utilisant des quantités significatives de BaO, comme celles décrites dans le brevet WO-96/11887 précité.

Cette combinaison de constituants permet également d'obtenir des verres dont le coefficient de dilatation reste du même ordre de grandeur que celui d'un verre silico-sodo-calcique traditionnel, soit des coefficients, mesurés de manière connue par des écarts de dilatation à des températures comprises entre 25 et 300°C, compris généralement entre 80 et 90.10⁻⁷°C⁻¹, notamment entre 82 et 86.10⁻⁷°C⁻¹.

Les verres selon l'invention présentent l'avantage d'être bien adaptés aux techniques de fusion associées au procédé de flottage du verre sur un bain de métal fondu. En effet, il est apparu que ces verres conduisent à une faible corrosion des réfractaires, du type AZS (alumine-zircone-silice), habituellement utilisés dans ce type de four. Ces verres garantissent ainsi une optimisation de la durée d'utilisation du four.

Les verres selon l'invention présentent également l'avantage de pouvoir être fondus et transformés en ruban de verre à des températures voisines de celles adoptées pour la fabrication d'un verre silico-sodo-calcique classique.

Ainsi, ils présentent généralement une température de liquidus T_{liq} d'au plus 1180°C, notamment comprise entre 1150 et 1170°C, et atteignent une viscosité ν en poises, correspondant à log ν = 3,5 à une température T_{log3,5} d'au moins 1160°C, notamment comprise entre 1160°C et 1200°C : ces valeurs de température de liquidus montrent une fusion des matières premières vitrifiables à des températures « acceptables » sur le plan industriel. Ces températures T_{log3,5} indiquent à l'homme de l'art les températures au-delà desquelles la viscosité est trop faible pour opérer le formage du verre.

Les compositions selon l'invention, dans leurs gammes de valeurs de T_{liq} et T_{log3,5} précitées, présentent avantageusement un « palier de travail » défini par la différence T_{log3,5}-T_{liq} (et correspondant à la zone de températures où l'on peut faire la fusion et le formage du verre) qui est positive, et notamment d'au moins 10°C à 30°C. Ces paliers qui pourraient paraître « étroits » pour des verres standards silico-sodo-calciques destinés à fabriquer des vitrages sont ici suffisants pour assurer un formage de qualité sans adopter des conditions trop extrêmes pour le fonctionnement du four. Il s'agit en effet de verres assez particuliers, pour des applications de type haute technologie à haute valeur ajoutée, comme les écrans plasma où l'on peut « se permettre » un contrôle et une adéquation très précise du fonctionnement du four : on reste dans des paliers de travail « accessibles » sans bouleversement ou prise de risque quant au four.

Les compositions telles que modifiées selon l'invention permettent de préserver le haut pouvoir isolant, sur le plan électrique, du verre. Ainsi, les verres selon l'invention présentent généralement une résistivité ρ en ohm.cm correspondant, à 250°C, à un log ρ d'au moins 9, notamment compris entre 9 et 11 : l'invention a diminué ou même supprimé du verre le BaO, pourtant avantageux notamment sur le plan électrique car très isolant, mais cette absence ou cette diminution s'est avérée compensée par la présence accrue d'autres éléments, notamment de la famille des oxydes alcalino-terreux, à propriétés électriques analogues au BaO.

Les verres selon l'invention présentent généralement une densité à 25°C inférieure à 3, notamment d'environ 2,7. Pour fixer les idées, on peut signaler qu'un verre de composition analogue mais qui contiendrait au moins 6 à 7% de BaO présente une densité d'au moins 3. Ce n'est pas une caractéristique indifférente : quand on vise l'application de ces verres en tant qu'écrans plasma, pour des postes de télévision notamment, le verre est pénalisant en termes de poids, et tout ce qui peut contribuer à l'alléger est très avantageux, sachant que les télévisions utilisant ces écrans sont destinées à être accrochées au mur.

Vont maintenant être précisées et justifiées les teneurs préférées en chacun des constituants des verres selon l'invention. En fait, l'absence ou la diminution du taux de BaO a dû être compensée par la présence, ou la présence accrue, d'autres oxydes dont les effets conjugués leur permettent de « remplacer » le BaO dans l'essentiel de ses propriétés.

Le choix de l'invention a été de conserver approximativement la même somme des teneurs en oxydes alcalino-terreux que dans les compositions verrières utilisant plus de 2% de BaO, par exemple en utilisant une teneur significative en SrO, qui est l'oxyde alcalino-terreux le plus proche chimiquement du BaO, et qui a donc un rôle très voisin sur les propriétés du verre, notamment en termes de strain point, coefficient de dilatation et fusibilité. Un seuil maximal de SrO est cependant à prévoir, de 10%, pour des raisons de coûts et de risque de dévitrification.

C'est également préférable de ne pas chercher à « compenser » l'essentiel du BaO par des teneurs trop élevées en CaO ou en MgO : autant la présence d'oxydes alcalino-terreux dans le verre est importante en tant qu'agents fluidifiants, afin d'élever le strain point, autant une trop forte teneur en CaO et en MgO d'une part peut tendre à user prématurément les réfractaires du four, d'autre part peut provoquer leur cristallisation conjointe sous forme de di-opside et risquer de dévitrifier le verre. Il s'est également avéré qu'il était avantageux d'abaisser les teneurs en oxydes alcalino-terreux, pour réduire au minimum tout risque de casse provoquée par des échauffements, et pour minimiser la fragilité mécanique des verres. Eviter les « casses thermiques » est notamment un objectif essentiel pour les verres utilisés, notamment, dans les vitrages anti-feu.

Avantageusement, on prévoit alors des teneurs pondérales en MgO + CaO + SrO + BaO comprises entre 15 et 25% ou 18 et 24%

Selon l'invention, on a donc tendance à ne compenser que « partiellement » le BaO par d'autres oxydes alcalino-terreux, et on prévoit de préférence d'augmenter conjointement également d'autres agents à rôle de fondant dans le verre, tout particulièrement les oxydes alcalins, et le K₂O de préférence au Na₂O. En effet, si les deux types d'oxydes alcalins Na₂O et K₂O sont nécessaires, en revanche, s'il l'on veut en augmenter la teneur globale, il est préférable de favoriser une augmentation en K₂O, qui présente l'avantage de fluidifier sans abaisser le strain point, sans être donc trop pénalisant sur les propriétés de dureté du verre après formage. On prévoit ainsi avantageusement, de préférence, un rapport de pourcentages pondéraux K₂O/Na₂O d'au moins 1,5, et notamment d'environ 2.

On a aussi tendance, dans le cadre de l'invention, à utiliser des teneurs en SiO₂ relativement élevées pour ce type de verre. En effet, SiO₂ joue un rôle essentiel dans le verre : des teneurs d'au moins 55% en poids contribuent à l'obtention de valeurs de strain point élevées. Il est à prévoir cependant une teneur maximale raisonnable, notamment de 60%, car au-delà, la fusion du mélange vitrifiable tend à nécessiter des températures élevées coûteuses en énergie et accélérant l'usure des réfractaires du four : l'ajustement du taux de silice permet donc de contribuer à conserver une fusibilité suffisante tout en maintenant le niveau de dureté des verres de l'invention à des niveaux comparables à ceux des verres avec BaO.

L'alumine Al₂O₃ est optionnelle. Si elle est prévue, il est préférable de la conserver à des teneurs faibles, au-delà desquelles le verre devient assez corrosif vis-à-vis des réfractaires du four et la viscosité du verre commence à augmenter trop significativement à température élevée. Sa présence en faibles teneurs peut présenter des avantages, notamment en augmentant la résistance chimique du verre.

La zircone ZrO₂ joue un rôle de stabilisant. Cet oxyde augmente dans une certaine mesure la résistance chimique du verre et favorise l'augmentation du strain point. Un pourcentage trop élevé en ZrO₂ tend à rendre difficile la fusion. Si cet oxyde est difficile à fondre, il présente l'avantage de n'augmenter que modérément, comparativement à d'autres oxydes comme la silice ou l'alumine, la viscosité des verres selon l'invention aux températures élevées. Cela permet d'éviter d'introduire dans ces verres des oxydes tel que B₂O₃, dont l'un des effets est de réduire la viscosité du verre, ou de trop augmenter la teneur des oxydes alcalins qui ont le même effet.

En fait, l'alumine et la zircone jouent des rôles assez similaires, on peut donc prévoir des sommes de teneurs Al₂O₃ + ZrO₂ supérieures à 8%, notamment comprises entre 9 et 15%, et jouer sur leurs proportions respectives.

Selon la première variante de l'invention, à somme Al₂O₃ + ZrO₂ constante, on peut choisir de faibles taux d'alumine de 0 à 5% et de plus forts taux de zircone, de 5 à 10%.

Selon la seconde variante de l'invention, toujours à somme Al₂O₃ + ZrO₂ constante, on peut choisir la démarche inverse d'un faible taux de zircone de 0 à 5% et un plus fort taux d'alumine de 5 à 10%. Dans cette seconde variante, pour les problèmes de corrosion liés à l'alumine évoqués plus haut, il est préférable d'adapter les réfractaires des fours, notamment en choisissant des réfractaires résistant mieux à la corrosion que les réfractaires usuels de type « AZS » (alumine-zircone-silice).

Comme évoqué précédemment, les oxydes Na₂O et K₂O permettent de maintenir la température de fusion des verres selon l'invention et leurs viscosités aux températures élevées dans les limites indiquées précédemment. Pour ce faire, la somme des teneurs de ces oxydes demeure supérieure à environ 10%, notamment comprise entre 10 et 15%.

Les oxydes alcalino-terreux introduits dans les verres selon l'invention ont pour effet globalement d'élever la température inférieure de recuisson, c'est la raison pour laquelle la somme de leurs teneurs pondérales MgO + CaO + SrO + BaO doit être supérieure à 15%, notamment supérieure ou égale à 18%. De préférence cette somme est maintenue dans la gamme 15-25% ou 18-24%. Au-delà de 24 à 25% environ, l'aptitude des verres à dévitrifier peut s'amplifier dans des proportions incompatibles avec un procédé de formage du verre par flottage sur bain métallique.

L'oxyde de bore B₂O₃ est optionnel. On peut en prévoir une faible quantité, pour ajuster la viscosité du verre à haute température.

Sont listées ci-dessous les teneurs préférées, en pourcentages pondéraux, des constituants des verres selon l'invention :
→ le taux de SiO₂ est de préférence compris entre 57 et 59%,
→ le taux de B₂O₃ est de préférence compris entre 0 et 1 %,
→ le taux de Na₂O est de préférence compris entre 3 et 5%,
le taux de K₂O est de préférence compris entre 6 et 8%, ou entre 7 et 9%
→ le taux de MgO est de préférence compris entre 1 et 5%
→ le le taux de CaO est de préférence compris entre 8 et 10%, ou encore entre 2 et 6%
→ le taux de SrO est de préférence compris entre 6 et 10%, ou encore entre 8 et 12%
le taux de BaO est de préférence compris entre 0 et 1 % ou entre 1 et 2%,
→ le taux de SO₃ est usuellement compris entre 0,005 et 0,15%.

Dans la première variante de l'invention à faible taux d'alumine et fort taux de zircone, on a de préférence :
→ le taux d'Al₂O₃ entre 1 et 4%,
→ le taux de ZrO₂ entre 6 et 9%.

Dans la seconde variante de l'invention, on a de préférence :
→ le taux d'Al₂O₃ entre 6 et 9%,
→ le taux de ZrO₂ entre 1 et 4%.

On peut signaler que les verres selon l'invention peuvent être totalement dépourvus de BaO, ou le BaO n'étant présent qu'en tant qu'impureté involontairement incorporée au verre et dans des teneurs proches de 0% : dans ce cas, il n'y a plus de risque de former du BaSO₄, donc plus ce risque de défauts optiques ayant pour origine la présence de tels cristaux.

On peut cependant aussi en avoir de 1 à 2% : ces teneurs restent « acceptables » en ce sens que l'on parvient encore à éviter ou quasiment éviter la formation de BaSO₄ lors de traitements thermiques ultérieurs au formage, mais au prix, peut-être, de précautions supplémentaires quant aux conditions où s'opèrent ces traitements thermiques, de type lavage(s) adapté(s).

Les compositions de verre selon l'invention peuvent donc être utilisées pour la fabrication de substrats essentiellement dépourvus de cristaux à base de sulfate de baryum, et notamment destinés pour des écrans émissifs de type écran plasma, écran électroluminescent ou écran à cathode froide. Ces substrats peuvent être obtenus par découpe de feuilles de verre à partir de ruban de verre continu obtenu par flottage du verre sur bain de métal fondu.

Elles peuvent aussi être utilisées pour la fabrication de vitrages anti-feu, notamment également obtenus par découpe de ruban de verre flotté, ou pour des systèmes de conversion de l'énergie solaire du type cellule photovoltaïque.

L'invention sera ci-après décrite plus en détails à l'aide des exemples non limitatifs suivants :
□ Une première série de verres selon les exemples 1 à 4 a été réalisée, sous forme de plaques obtenues par découpe après formage des matières vitrifiables sur un bain d'étain selon le procédé de flottage bien connu.
□ Une seconde série de verres selon les exemples 5 à 7 a été modélisée mathématiquement.

Dans le tableau ci-dessous, sont regroupées, pour chacun de ces exemples, les formulations chimiques avec les teneurs exprimées en pourcentages pondéraux, les valeurs de température inférieure à recuisson des verres (dite strain point) T_{i.r}, les coefficients de dilatation thermiques α_{(25-300°C)} des verres en °C⁻¹, le log de leurs résistivités en ohm.cm log ρ, leurs températures de liquidus T_{liq}, leurs températures à des viscosités en poises correspondant respectivement à log 1,6 et log 3,5 T_{log1,6} et T_{log3,5}, leurs densités d mesurées à 25°C. Toutes les températures sont exprimées en degrés Celsius.

(A noter que seuls les composants présents en une teneur significative et mesurable ont été indiqués dans les formulations chimiques : il faut également comprendre que ces verres peuvent contenir des impuretés autres que SO₃ en des taux très faibles, généralement inférieurs à 0,2 à 0,1 %). Les taux en SO₃ n'ont été mesurés que pour les exemples 1, 3 et 4.

| | **EX. 1** | **EX. 2** | **EX. 3** | **EX. 4** | **EX. 5** | **EX. 6** | **EX. 7** |
|---|---|---|---|---|---|---|---|
| SiO₂ | 58 | 57,5 | 57,2 | 57,5 | 57,5 | 55,5 | 55 |
| Al₂O₃ | 3 | 3 | 3 | 3 | 4 | 3,5 | 3,5 |
| ZrO₂ | 8 | 7 | 9 | 9 | 6,5 | 8 | 8 |
| Na₂O | 4,5 | 3,5 | 4,8 | 5 | 4 | 4,5 | 4,5 |
| K₂O | 7,5 | 8 | 8 | 8 | 7,5 | 7,5 | 7,5 |
| MgO | 1,5 | 3 | 1,5 | 2 | 1,5 | 4 | 5 |
| CaO | 8,5 | 9 | 8,5 | 8,5 | 9 | 8,5 | 7,5 |
| SrO | 9 | 9 | 6 | 7 | 10 | 7,5 | 8 |
| BaO | 0. | 0 | 2 | 0 | 0 | 1 | 0,5 |
| SO₃ | 0,07-0,1 | - | 0,04 | 0,1 | - | - | - |
| T_{i.r} | 609 | 603 | 609 | 609 | 615,2 | 611,5 | 610,8 |
| α | 83,6.10⁻⁷ | 82,6.10⁻⁷ | 84,4.10⁻⁷ | 85.4.10⁻⁷ | 83,5.10⁻⁷ | 83,2.10⁻⁷ | 82,8.10⁻⁷ |
| log ρ (250°C) | 10,1 | 10,5 | 9,97 | 9,83 | 10,3 | 10,16 | 10,13 |
| T_{lig} | 1160 | 1170 | 1160 | 1150 | - | - | - |
| T_{log1,6} | 1562 | 1153 | 1566 | 1556 | 1589 | 1535 | 1525 |
| T_{loq3,5} | 1187 | 1183 | 1190 | 1181 | 1196 | 1169 | 1164 |
| d | 2,778 | 2,775 | 2,785 | 2,763 | - | - | - |

De ces données, on vérifie que les verres selon l'invention ayant de 0 à 2% de BaO, ont tous une dureté élevée à haute température (strain point supérieur à 600°C), une forte résistivité, une faible dilatation thermique, une densité moins élevée qu'avec des taux élevés en oxyde de baryum.

En outre, leur fabrication, lors de la fusion dans le four et lors du formage sur le bain d'étain, n'a pas posé de problème insurmontable. On vérifie notamment que l'écart entre la température T_{log3,5} et la température de liquidus T_{liq} reste largement positif.

Par ailleurs, des échantillons de verres de la première série ont été soumis à des recuissons de type de celles subies par les verres destinés à servir d'écrans plasma et destinées à stabiliser le verre : aucun d'entre eux n'a montré de défauts optiques imputables à la présence de cristaux de type BaSO₄ au niveau des points de contact verre/support.

A noter également que l'on peut prévoir d'incorporer de l'oxyde de lithium Li₂O dans les compositions, notamment en tant qu'agent fondant, de préférence dans des teneurs, en pourcentages pondéraux, comprises entre 0 et 3%, notamment 0 et 1 %.

En conclusion, l'invention a mis au point des verres au moins aussi performants que des verres déjà décrits pour des applications de type écrans émissifs, mais qui, en plus, suppriment l'apparition aléatoire de défauts optiques du type colorations localisées. En fait, l'invention a permis de détecter les raisons de ces colorations intempestives apparaissant lors des traitements thermiques, alors même qu'il était loin d'être évident qu'il s'agissait de cristaux de BaSO₄, puisque le taux de soufre dans le verre est usuellement extrêmement modeste. Diminuer ou supprimer le taux de baryum apporte mêmes d'autres avantages, en termes de coûts, car les matières premières porteuses de baryum sont assez coûteuses comparativement à d'autres, et en termes d'allègement des verres.

## Revendications

1. Composition de verre destinée à la fabrication de substrats ou de plaques thermiquement stables, ***caractérisée en ce qu'***elle comprend les constituants ci-après dans les proportions pondérales suivantes :
| | |
|---|---|
| SiO₂ | 55-60% |
| Al₂O₃ | 0 - 5 %, de préférence 1 - 4 % |
| ZrO₂ | 5 - 10 %, de préférence 6 - 9 % |
| B₂O₃ | 0 - 3 %, de préférence 0 - 1 % |
| Na₂O | 2 - 6 %, de préférence 3 - 5 % |
| K₂O | 5-9% |
| MgO | 1 - 6 % |
| CaO | 7 - 11% |
| SrO | 4 -12 %, de préférence 6-10% |
| BaO | 0 - 2 %, de préférence 0-1 ou 1-2% |
| SO₃ | supérieur à 0% et d'au plus 0,5%, de préférence entre 0,005 et 0,15% |
avec les relations :
Na₂O + K₂O ≥ 8 %,
notamment entre 10 à 15%
MgO + CaO + SrO + BaO > 15 %,
ladite composition présentant une température inférieure de recuisson (strain point) supérieure à 600°C.

2. Composition de verre destinée à la fabrication de substrats ou de plaques thermiquement stables, ***caractérisée en ce qu'***elle comprend les constituants ci-après dans les proportions pondérales suivantes :
| | |
|---|---|
| siO₂ | 55 - 60 % |
| ZrO₂ | 0 - 5 %, de préférence 1 - 4 % |
| Al₂O₃ | 5 - 10 %, de préférence 6 - 9 % |
| B₂O₃ | 0 - 3 %, de préférence 0 - 1 % |
| Na₂O | 2 - 6 %, de préférence 3 - 5 % |
| K₂O | 5 - 9% |
| MgO | 1 - 6% |
| CaO | 7 - 11% |
| SrO | 4 - 12%, de préférence 6 - 10% |
| BaO | 0 - 2 %, de préférence 0 - 1 ou 1 - 2 % |
| SO₃ | supérieur à 0% et d'au plus 0,5%, de préférence entre 0,005 et 0,15% |
avec les relations :
Na₂O + K₂O ≥ 8 %,
notamment entre 10 à 15 %
MgO + CaO + SrO + BaO > 15 %,
ladite composition présentant une température inférieure de recuisson (strain point) supérieure à 570°C, de préférence supérieure à 580 ou 600°C.

3. Composition selon la revendication 1 ou 2, ***caractérisée en ce qu'***elle vérifie, en proportions pondérales :
MgO+CaO+SrO+BaO 15 à 25 %.

4. Composition selon l'une des revendications précédentes, ***caractérisée en ce qu'***elle vérifie, en proportions pondérales :
K₂O/Na₇O ≥ 1,5,
notamment environ 2.

5. Composition selon l'une des revendications précédentes, ***caractérisée en ce* qu'**elle vérifie, en proportions pondérales :
Al₂O₃ + ZrO₂ > 8%,
notamment 9 à 15%.

6. Composition selon l'une des revendications précédentes, **caractérisée en ce qu'**elle présente un coefficient de dilatation (α_{25-300°C}) compris entre 80 et 90.10⁻⁷°C⁻¹, notamment 82 à 86.10⁻⁷°C⁻¹.

7. Composition selon l'une des revendications précédentes, ***caractérisée en ce qu'***elle présente une température de liquidus T_{liq} d'au plus 1180°C, notamment comprise entre 1150 et 1170°C.

8. Composition selon l'une des revendications précédentes, ***caractérisée en ce qu'***elle présente une viscosité v en poises correspondant à log ν = 3,5 à une température d'au moins 1160°C, notamment comprise entre 1160°C et 1200°C.

9. Composition selon l'une des revendications précédentes, ***caractérisée en ce qu'***elle présente une résistivité p en ohm.cm à 250°C correspondant à log p d'au moins 9, notamment entre 9 et 11.

10. Composition selon l'une des revendications précédentes, ***caractérisée en ce qu'***elle présente une densité à 25°C inférieure à 3, notamment d'environ 2,7.

11. Utilisation des compositions de verre telles que définies par l'une quelconque des revendications précédentes pour la fabrication de substrats essentiellement dépourvus de cristaux à base de sulfate de baryum, pour écran émissif de type écran plasma, écran électroluminescent ou écran à cathode froide, notamment à partir d'une feuille de verre découpée dans un ruban de verre obtenu par flottage du verre sur un bain de métal fondu.

12. Utilisation des compositions de verre telles que définies par l'une quelconque des revendications 1 à 9 pour la fabrication de vitrage anti-feu, notamment réalisé à partir de plaque ou feuille de verre découpée dans un ruban de verre obtenu par flottage du verre sur un bain de métal fondu.

13. Utilisation des compositions de verre telles que définies par l'une quelconque des revendications 1 à 9 pour la fabrication de systèmes de conversion d'énergie solaire du type cellule photovoltaïque.

## Claims

1. Glass composition intended for the manufacture of thermally stable substrates or panes, **characterized in that** it comprises the following constituents in the following proportions by weight:
| | |
|---|---|
| SiO₂ | 55 - 60% |
| Al₂O₃ | 0 - 5%, preferably 1-4% |
| ZrO₂ | 5 - 10%, preferably 6-9% |
| B₂O₃ | 0 - 3%, preferably 0-1% |
| Na₂O | 2 - 6%, preferably 3-5% |
| K₂O | 5 - 9% |
| MgO | 1 - 6% |
| CaO | 7 - 11% |
| SrO | 4 - 12%, preferably 6-10% |
| BaO | 0 - 2%, preferably 0-1 or 1-2% |
| SO₃ | greater than 0% and at most 0.5%, preferably between 0.005 and 0.15% |
with the relationships:
Na₂O + K₂O ≥ 8%,
in particular between 10 and 15%,
MgO + CaO + SrO + BaO > 15%,
the said composition having a strain point in excess of 600°C.

2. Glass composition intended for the manufacture of thermally stable substrates or panes, **characterized in that** it comprises the following constituents in the following proportions by weight:
| | |
|---|---|
| SiO₂ | 55 - 60% |
| ZrO₂ | 0 - 5%, preferably 1-4% |
| Al₂O₃ | 5 - 10%, preferably 6-9% |
| B₂O₃ | 0 - 3%, preferably 0-1% |
| Na₂O | 2 - 6%, preferably 3-5% |
| K₂O | 5 - 9% |
| MgO | 1 - 6% |
| CaO | 7 - 11% |
| SrO | 4 - 12%, preferably 6-10% |
| BaO | 0 - 2%, preferably 0-1 or 1-2% |
| SO₃ | greater than 0% and at most 0.5%, preferably between 0.005 and 0.15% |
with the relationships:
Na₂O + K₂O ≥ 8%,
in particular between 10 and 15%
MgO + CaO + SrO + BaO > 15%,
the said composition having a strain point in excess of 570°C, preferably in excess of 580 or 600°C.

3. Composition according to Claim 1 or 2, **characterized in that** it satisfies, in proportions by weight:
MgO + CaO + SrO + BaO 15 to 25%.

4. Composition according to one of the preceding claims, **characterized in that** it satisfies, in proportions by weight:
K₂O/Na₂O ≥ 1.5,
in particular about 2.

5. Composition according to one of the preceding claims, **characterized in that** it satisfies, in proportions by weight:
Al₂O₃ + ZrO₂ > 8%,
in particular 9 to 15%.

6. Composition according to one of the preceding claims, **characterized in that** it has a coefficient of expansion (α_{25-300°C}) of between 80 and 90-10⁻⁷°C⁻¹, in particular 82 to 86-10⁻⁷°C⁻¹.

7. Composition according to one of the preceding claims, **characterized in that** it has a liquidus temperature T_{liq} of at most 1180°C, in particular between 1150 and 1170°C.

8. Composition according to one of the preceding claims, **characterized in that** it has a viscosity υ in poise corresponding to log υ = 3.5 at a temperature of at least 1160°C, in particular between 1160°C and 1200°C.

9. Composition according to one of the preceding claims, **characterized in that** it has a resistivity p in ohm.cm at 250°C corresponding to log ρ with a value of at least 9, in particular between 9 and 11.

10. Composition according to one of the preceding claims, **characterized in that** it has a density at 25°C of less than 3, in particular of about 2.7.

11. Use of the glass compositions as defined by any one of the preceding claims for the manufacture of substrates essentially free of crystals based on barium sulphate, for an emissive screen of the plasma screen, electroluminescent screen or cold-cathode screen type, in particular starting with a glass sheet cut from a glass ribbon obtained by floating the glass on a molten metal bath.

12. Use of the glass compositions as defined by any one of claims 1 to 9 for the manufacture of fire-resistant glazing, in particular made from a glass pane or sheet cut from a glass ribbon obtained by floating the glass on a molten metal bath.

13. Use of the glass compositions as defined by any one of claims 1 to 9 for the manufacture of solar energy conversion systems of the photovoltaic cell type.

## Patentansprüche

1. Glaszusammensetzung, die für die Herstellung von thermisch stabilen Substraten oder Platten bestimmt ist, **dadurch gekennzeichnet, dass** sie die nachstehenden Bestandteile in den folgenden Gewichtsverhältnissen umfasst:
| | |
|---|---|
| SiO₂ | 55 bis 60 % |
| Al₂O₃ | 0 bis 5 %, vorzugsweise 1 bis 4 % |
| ZrO₂ | 5 bis 10 %, vorzugsweise 6 bis 9 % |
| B₂O₃ | 0 bis 3 %, vorzugsweise 0 bis 1 % |
| Na₂O | 2 bis 6 %, vorzugsweise 3 bis 5 % |
| K₂O | 5 bis 9 % |
| MgO | 1 bis 6 % |
| CaO | 7 bis 11 % |
| SrO | 4 bis 12 %, vorzugsweise 6 bis 10 % |
| BaO | 0 bis 2 %, vorzugsweise 0 bis 1 oder 1 bis 2 % |
| SO₃ | mehr als 0 % und höchstens 0,5 %, vorzugsweise zwischen 0,005 und 0,15 % |
mit den Beziehungen:
Na₂O + K₂O ≥ 8 %,
insbesondere zwischen 10 und 15 %
MgO + CaO + SrO + BaO > 15%,
wobei die Zusammensetzung eine untere Entspannungstemperatur (Strain Point) von über 600 °C aufweist.

2. Glaszusammensetzung, die für die Herstellung von thermisch stabilen Substraten oder Platten bestimmt ist, **dadurch gekennzeichnet, dass** sie die nachstehenden Bestandteile in den folgenden Gewichtsverhältnissen umfasst:
| | |
|---|---|
| SiO₂ | 55 bis 60 % |
| ZrO₂ | 0 bis 5 %, vorzugsweise 1 bis 4 % |
| Al₂O₃ | 5 bis 10 %, vorzugsweise 6 bis 9 % |
| B₂O₃ | 0 bis 3 %, vorzugsweise 0 bis 1 % |
| Na₂O | 2 bis 6 %, vorzugsweise 3 bis 5 % |
| K₂O | 5 bis 9 % |
| MgO | 1 bis 6 % |
| CaO | 7 bis 11 % |
| SrO | 4 bis 12 %, vorzugsweise 6 bis 10 % |
| BaO | 0 bis 2 %, vorzugsweise 0 bis 1 oder 1 bis 2 % |
| SO₃ | mehr als 0 % und höchstens 0,5 %, vorzugsweise zwischen 0,005 und 0,15 % |
mit den Beziehungen:
Na₂O + K₂O ≥ 8 %,
insbesondere zwischen 10 und 15 %
MgO + CaO + SrO + BaO > 15 %,
wobei die Zusammensetzung eine untere Entspannungstemperatur (Strain Point) von über 570 °C, vorzugsweise von über 580 °C oder 600 °C aufweist.

3. Zusammensetzung nach Anspruch 1 oder 2, **dadurch gekennzeichnet, dass** sie in Gewichtsverhältnissen folgendes erfüllt:
MgO + CaO + SrO + BaO 15 bis 25 %.

4. Zusammensetzung nach einem der vorstehenden Ansprüche, **dadurch gekennzeichnet, dass** sie in Gewichtsverhältnissen folgendes erfüllt:
K₂O/Na₂O ≥ 1,5,
insbesondere etwa 2.

5. Zusammensetzung nach einem der vorstehenden Ansprüche, **dadurch gekennzeichnet, dass** sie in Gewichtsverhältnissen folgendes erfüllt:
Al₂O₃ + ZrO₂ > 8 %,
insbesondere 9 bis 15 %.

6. Zusammensetzung nach einem der vorstehenden Ansprüche, **dadurch gekennzeichnet, dass** sie einen Ausdehnungskoeffizienten (α₂₅₋₃₀₀°C) im Bereich zwischen 80 und 90.10⁻⁷°C⁻¹, insbesondere 82 bis 86.10⁻⁷°C⁻¹ aufweist.

7. Zusammensetzung nach einem der vorstehenden Ansprüche, **dadurch gekennzeichnet, dass** sie eine Liquidustemperatur T_{liq} von höchstens 1180 °C, insbesondere im Bereich zwischen 1150 und 1170 °C aufweist.

8. Zusammensetzung nach einem der vorstehenden Ansprüche, **dadurch gekennzeichnet, dass** sie eine Viskosität ν in Poise aufweist, die log ν = 3,5 bei einer Temperatur von wenigstens 1160 °C, insbesondere zwischen 1160 °C und 1200 °C entspricht.

9. Zusammensetzung nach einem der vorstehenden Ansprüche, **dadurch gekennzeichnet, dass** sie einen spezifischen Widerstand p in Ohm.cm bei 250 °C aufweist, der log ρ von wenigstens 9, insbesondere zwischen 9 und 11 entspricht.

10. Zusammensetzung nach einem der vorstehenden Ansprüche, **dadurch gekennzeichnet, dass** sie eine Dichte bei 25 °C von weniger als 3, insbesondere von etwa 2,7 aufweist.

11. Verwendung der Glaszusammensetzungen, wie sie durch einen der vorstehenden Ansprüche definiert sind, für die Herstellung von Substraten, die im Wesentlichen frei von Kristallen auf der Basis von Bariumsulfat sind, für Emissionsbildschirme vom Typ Plasmabildschirme, Elektrolumineszenz-Bildschirme oder Kaltkathoden-Bildschirme, insbesondere aus einer Glasfolie, die aus einem Glasstreifen ausgeschnitten ist, der durch Aufschwimmen des Glases auf einem Bad aus geschmolzenem Metall erhalten wird.

12. Verwendung der Glaszusammensetzungen, wie sie durch einen der Ansprüche 1 bis 9 definiert sind, für die Herstellung einer Brandschutzverglasung, die insbesondere aus einer Glasplatte oder -folie hergestellt wird, welche aus einem Glasstreifen ausgeschnitten ist, der durch Aufschwimmen des Glases auf einem Bad aus geschmolzenem Metall erhalten wird.

13. Verwendung der Glaszusammensetzungen, wie sie durch einen der Ansprüche 1 bis 9 definiert sind, für die Herstellung von Systemen zur Umwandlung von Solarenergie, vom Typ photovoltaische Zelle.
